# EUROPÄISCHE PATENTSCHRIFT

(11) **EP 2 068 011 B1**
(45) Veröffentlichungstag und Bekanntmachung des Hinweises auf die Patenterteilung: **19.02.2014**
(21) Anmeldenummer: 08020843.2
(22) Anmeldetag: 01.12.2008
(51) Int. Cl.: F16B 13/14

(54) **Verbindungsvorrrichtung und Verfahren zur Herstellung einer Verbindungsvorrichtung**
Connection device and method for manufacturing a connection device
Dispositif de connexion et procédé de fabrication d'un dispositif de connexion

(30) Priorität: 30.11.2007 DE 102007058146
(43) Veröffentlichungstag der Anmeldung: 10.06.2009
(73) Patentinhaber: Bathon, Leander, 63864 Glattbach (DE); Bathon, Tobias, 63864 Glattbach (DE)
(72) Erfinder: Bathon, Tobias, 63864 Glattbach (DE)
(74) Vertreter: Thürer, Andreas

(56) Entgegenhaltungen:
- EP-A1- 0 572 955
- DE-A1- 2 450 473
- DE-A1- 19 818 739

## Beschreibung

Die Erfindung betrifft eine Verbindungsvorrichtung, mit einem aufnehmenden Bauteil, insbesondere einem Holzkörper, der zumindest eine insbesondere durchgehende Halteausnehmung aufweist, und einem Verbundkörper, der in die Halteausnehmung im Holzkörper eingebracht ist, nach dem Oberbegriff von Anspruch 1 sowie ein Verfahren zur Herstellung einer Verbindungsvorrichtung nach dem Oberbegriff von Anspruch 13.

Bekannt sind Verbindungsvorrichtungen beispielsweise aus der DE 44 45 108 A1, die ein Verbindungssystem von Holzwerkstoffen und anderen Werkstoffen mit Hilfe von Klebern zeigen.

DE 198 18 739 A1 zeigt ein Befestigungselement aus einem Bewehrungsstab auf dem eine oder mehrere Konushülsen angebracht sind und der Ringspalt mit einer aushärtbaren Masse befüllt ist.

EP 0 572 955 A1 zeigt ein Verbindungselement, das in Verbindungslöcher eingesetzt ist, angebracht an Widerlageroberflächen zwischen Strukturelementen. Ein Klebemittel ist wird von einem Ende eines hohlen Teils eines Verbindunaselements eingefüllt.

Nachteilig ist, dass aufgrund von unterschiedlichen Ausdehnungskoeffizienten der verbundenen Materialien und unterschiedlichen Belastungseigenschaften eine Loslösung der Verbindung droht. Insbesondere Holzkörper in Form von geschnittener oder veredelter Ware neigen zu Querschnittänderungen in Bezug auf Klimawechsel.

Aufgabe der vorliegenden Erfindung ist es somit, eine sichere und zuverlässige Verbindungsvorrichtung auch beispielsweise unter unterschiedlichen Materialeigenschaften bereitzustellen.

Die Aufgabe wird gelöst durch eine Verbindungsvorrichtung, mit einem aufnehmenden Bauteil, insbesondere einem Holzkörper, der zumindest eine insbesondere durchgehende Halteausnehmung aufweist, und mit einem Verbundkörper, der in die Halteausnehmung im Holzkörper eingebracht ist, wobei in einem Zwischenraum in der Halteausnehmung zwischen Holzkörper und eingesetztem Verbundkörper eine Verbundmasse derart aushärtend eingebracht ist, dass der Verbundkörper in der Halteausnehmung im wesentlichen kraftschlüssig gehalten ist, wobei zwischen Verbundkörper und Verbundmasse zumindest teilweise eine Zwischenschicht, insbesondere im Sinne einer Ausbildung der Oberfläche des Verbundkörpers und/oder der Verbundmasse, vorgesehen ist, die die Verbundmasse vom Verbundkörper zumindest teilweise entkoppelt, wobei der Verbundkörper zumindest eine bereichsweise Eintiefung aufweist, die derart ausgebildet ist, dass nach Abbinden der Verbundmasse im Zwischenraum, insbesondere in der bereichsweisen Eintiefung, ein kraftschlüssiger, mechanische Halt von dem Verbundkörper zu dem Holzkörper ausgebildet ist, wobei insbesondere eine Scherfläche der Verbundmasse größer ist als eine Scherfläche des Verbundkörpers.

Die Zwischenschicht in der Berührungsfläche von Verbundkörper und Verbundmasse erlaubt eine Entkopplung der benachbarten Materialien ohne dabei die Tragfähigkeit zu beeinflussen. Somit ist eine Formänderung des Holzkörpers erlaubt, ohne die mechanische Verzahnung zwischen Verbundkörper und Verbundmasse merklich zu schwächen. Gleichzeitig erlaubt diese Entkopplung eine Querschnittsänderung der Einheit aus Verbundmasse und Holzkörper, die durch Adhäsion von Verbundmasse zu dem Holzkörper gegeben ist. Hierdurch ist - auch ohne eine klebende Verbindung zwischen Verbundmasse und Verbundkörper - eine dauerhafte Verlässlichkeit der Verbindungskopplung gewährleistet. Die Zwischenschicht eliminiert den mechanischen Verbund zwischen der Verbundmasse und dem Verbundkörper zumindest partiell. Dadurch wird der Krafteinleitungsschwerpunkt des Verbundkörpers in die Tiefe des Holzkörpers verlagert und somit eine Spaltgefahr des Holzwerkstoffs reduziert.

Vorteilhaft ist es, wenn der Verbundkörper zumindest eine bereichsweise Eintiefung aufweist, die derart ausgebildet ist, dass nach Abbinden der Verbund masse im Zwischenraum, insbesondere in der bereichsweisen Eintiefung, ein kraftschlüssiger, mechanischer Halt von dem Verbundkörper zu dem Holzkörper ausgebildet ist, wobei insbesondere eine Scherfläche der Verbundmasse größer ist als eine Scherfläche des Verbundkörpers.

Die Verbindungskopplung besteht somit aus zumindest einem Verbundkörper, der zumindest einer bereichsweise Eintiefung und eine zumindest partielle Zwischenschicht aufweist. Die Verbundmasse füllt den Zwischenraum von Halteausnehmung zu Verbundkörper im wesentlichen vollständig aus. Dabei erzeugen die bereichsweisen Eintiefungen des Verbundkörpers eine starke und haltbare mechanische Verzahnung mit der Verbundmasse. Zugleich ist die Verbundmasse durch Adhäsionskräfte mit der Berührungsfläche zur Halteausnehmung im Holzkörper gehalten. Somit liegt einerseits eine mechanische Verzahnung bzw. Verdübelung von Verbundkörper zu Verbundmasse und andererseits eine Adhäsion von Verbundmasse zum Holzkörper vor.

Die Eintiefung im Verbundkörper zeichnet sich besonders dadurch aus, dass die Scherfläche der Verbundmasse vorzugsweise größer ist als die Scherfläche des Verbundkörpers. Dies ist dadurch begründet, dass die Festigkeit des Verbundkörpers größer ist als die der Verbundmasse. Somit ist das Verhältnis der Scherfläche zu Materialfestigkeit von Verbundmasse und Verbundkörper ein wichtiger Aspekt für die geometrische Ausgestaltung. Bei dünnwandigen Verbundkörpern sind somit beispielsweise Ausführungen bevorzugt, bei denen sich gegenüberliegende Eintiefungen treffen können und dadurch eine durchgehende Öffnung im Sinne eines Lochs ausbilden. In diesem Fall wirkt die durchgängige Verbundmasse als dübelartige Haltebrücke zwischen den beiden gegenüberliegenden Holzöffnungsflächen, auch ohne dass ein klebender Verbund zu dem Verbundkörper gegeben ist. Die Adhäsion der Verbundmasse mit der Holzwandung dient dabei als Rückverankerung der dübelartigen Haltebrücken.

Vorteilhaft ist es, wenn die Verbundmasse nach Aushärtung eine annähernd vollständige Adhäsion zur einer Holzoberfläche der Halteausnehmung im Holzkörper erzeugt. Hierdurch ist eine besonders starke Einheit von Verbundmasse und Holzkörper gegeben.

Eine sehr sicherer Halt ist gegeben, wenn die bereichsweise Eintiefung teilweise oder vollständig durch den Verbundkörper durchgehend im Sinne einer Bohrung ausgebildet ist.

Der Halt wird weiter verstärkt, wenn die bereichsweise Eintiefung in einem rechten Winkel zu einer Beanspruchungsrichtung ausgebildet ist und/oder wenn die bereichsweise Eintiefung einen Hinterschnitt mit einem Winkel größer als 90 ° aufweist, der insbesondere gebogen ausgebildet ist. Dadurch wird ein Verdübelungseffekt ohne Spreizwirkung zwischen Verbundkörper und Verbundmasse erzeugt. Überraschend hat es sich gezeigt, dass bei einem leichten Hinterschnitt, d.h. der Winkel ist größer gleich 90°, die Verzahnung bzw. Verdübelung noch inniger ausfällt. Zudem hat es sich gezeigt, dass ein gebogener Hinterschnitt eine bevorzugte geometrische Ausgestaltung darstellt.

Eine sicheres und schnelles Einfüllen der Verbundmasse ist möglich, wenn der Verbundkörper einen Durchlass zum Einfüllen von Verbundmasse in den Zwischenraum, insbesondere in die bereichsweise Eintiefung, insbesondere an eine tiefste Stelle des Zwischenraums, aufweist. Im Verbundkörper ist ein Durchlass, insbesondere in Form einer Bohrung oder Schlitz, enthalten, der es erlaubt, die Verbundmasse von Außen durch den Verbundkörper hindurch ins Innere der bereichsweisen Eintiefung zu injizieren. Dadurch ist gewährleistet, dass durch das gezielte und langsame Einfüllen der Verbundmasse die Luft aus der Halteausnehmung im Holzkörper entweichen kann. Am außenliegenden Ende des Verbundkörpers ist beispielsweise durch eine Manschette das Austreten der Verbundmasse verhindert.

Eine vollständige Ausfüllung des Zwischenraums sowie eine Kontrollfunktion ist gegeben, wenn ein Auslass zum Austreten von verdrängter Luft aus dem Zwischenraum in der Halteausnehmung vorgesehen ist, der insbesondere in dem Verbundkörper und/oder im Holzkörper vorgesehen ist.

Vorteilhaft ist es, wenn der Verbundkörper einen Abschlussbereich, insbesondere in einem vorderen Bereich des Verbundkörpers ausgebildet, insbesondere in Form einer außenliegenden Manschette, aufweist, der insbesondere ein Austreten von Verbundmasse aus dem Zwischenraum verhindert.

Ein besonders einfacher Aufbau liegt vor, wenn der Durchlass und/oder der Auslass im Abschlussbereich des Verbundkörpers, insbesondere in der Manschette, eingerichtet sind. Der Durchlass zum Einfüllen der Verbundmasse kann insbesondere in der Manschette gegeben ist. Der Auslass zur Entlüftung kann im Holzkörper und/oder in einer weiteren Bohrung in der Manschette vorgesehen sein.

Vorteilhaft ist es, wenn die Zwischenschicht eine eine Adhäsion der Verbundmasse und des Verbundkörpers zumindest teilweise verhindernde Beschichtung der Oberfläche des Verbundkörpers und/oder der Kontaktfläche der Verbundmasse ist, insbesondere eine Pulverbeschichtung und/oder eine Zinkauflage und/oder ein Ölfilm und/oder eine Folie und/oder ein Anstrich.

Vorteilhaft ist es, wenn die Verbundmasse ein Kleber, insbesondere ein- und/oder zweikomponentig, und/oder ein Mörtel, insbesondere eine Mörtelmischung, und/oder ein Silicon ist, wobei die Verbundmasse insbesondere einen Anteil Fasern und/oder Bewehrungen aufweist. Als einfache Verbundmasse eignen sich vorteilhaft ein- bzw. zweikomponentige Kleber, Mörtelmischungen und Silicone. Bei hohen Beanspruchungen der Verbindungskopplung sind Faseranteile bzw. Bewehrungsanteile in der Verbundmasse von Vorteil.

Eine größere Einbauvariantenvielfalt ist gegeben, die je nach lokalen Gegebenheiten verwendet werden kann, wenn die Verbundmasse vor und/oder nach dem Einsetzen des Verbundkörpers in die Halteausnehmung im Holzkörper einzufüllen ist.

Die Aufgabe wird weiterhin gelöst durch ein Verfahren zur Herstellung einer Verbindungsvorrichtung, nach einem der Ansprüche 1 bis 13, wobei in einen Holzkörper zumindest eine insbesondere durchgehende Halteausnehmung eingebracht wird, insbesondere mittels Bohren und/oder Fräsen, und in einen Verbundkörper zumindest eine bereichsweise Eintiefung eingebracht wird und eine Zwischenschicht aufgebracht wird, die eine Adhäsion zwischen einer Verbundasse und einer Oberfläche des Verbundkörpers zumindest teilweise verhindert, und der Verbundkörper in die Halteausnehmung eingebracht wird, wobei die Verbundmasse vor dem Einbringen des Verbundkörpers in die Halteausnehmung und/oder nach dem Einbringen des Verbundkörpers in die Halteausnehmung eingebracht wird.

Vorteilhaft ist es, wenn die Verbundmasse durch einen Durchlass in einen Zwischenraum zwischen Verbundkörper und Halteausnehmung eingebracht wird, wobei verdrängte Luft insbesondere durch einen Auslass aus dem Zwischenraum entweicht.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: einen Holzkörper mit Halteausnehmungen,
- Fig. 2: einen Verbundkörper,
- Fig. 3: einen Verbundkörper mit Manschette,
- Fig. 4: einen Verbundkörper,
- Fig. 5: einen Verbundkörper,
- Fig. 6: einen Längsschnitt durch einen Holzkörper und einen eingesetzten Verbundkörper,
- Fig. 6b: Hinterschnitt,
- Fig. 7: einen Längsschnitt durch einen Holzkörper und einen eingesetzten Verbundkörper,
- Fig. 8: eine Verbindungsvorrichtung mit mehreren Verbundkörpern und
- Fig. 9: eine Verbindungsvorrichtung.

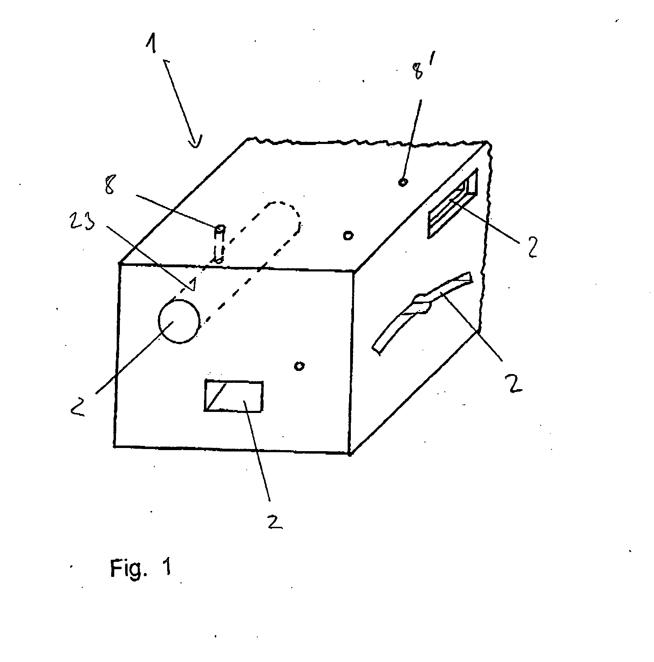

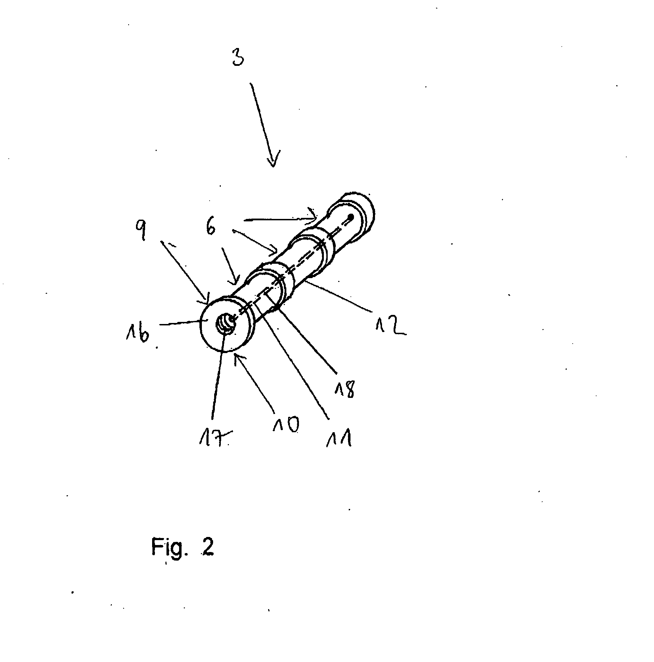

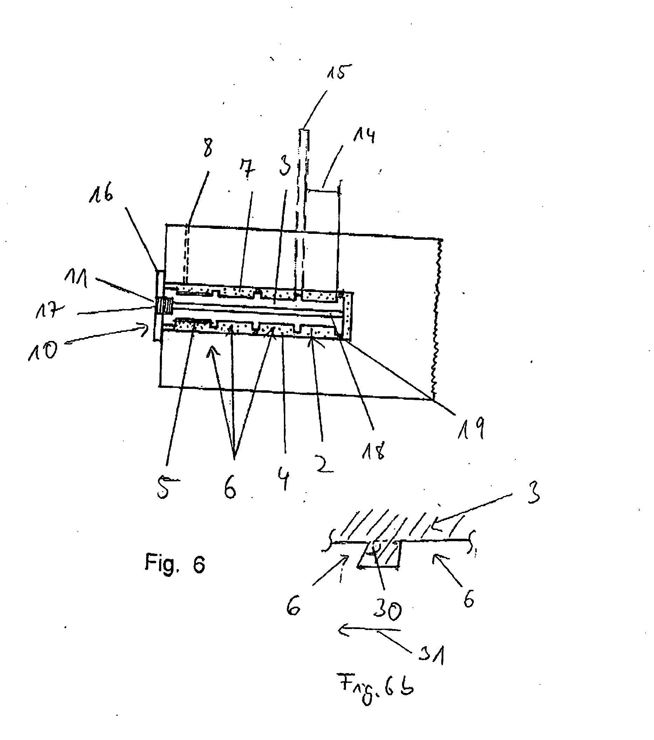

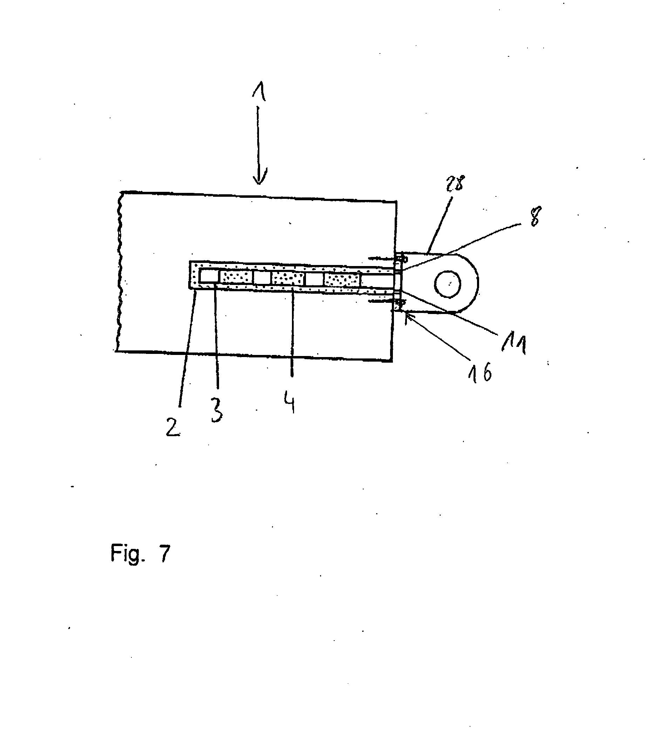

Fig. 1 zeigt einen Holzkörper 1 mit Halteausnehmungen 2 zum Einsetzen von in den folgenden Figuren 2, 3, 4, 5 etc. beispielhaft dargestellten Verbundkörpern 3 zur Herstellung einer erfindungsgemäßen Verbindungsvorrichtung. Die geometrische Ausbildung der Halteausnehmung 2 ist dabei bevorzugt an die geometrische Form des Verbundkörpers 3 angepasst. Die Halteausnehmungen können beispielsweise durch Bohren, Fräsen, Sägen, Schneiden oder dergleichen in den Holzwerkstoff eingebracht werden. Das Einsetzen der Verbundkörper 3 kann direkt nach der Erzeugung der Halteausnehmungen oder auch später beim Einbau in einen Gesamtbau erfolgen. Die in Fig. 6 und 7 dargestellte Verbundmasse 4 kann dabei vor und/oder nach dem Einbringen der Verbundkörper 3 in die entsprechenden Halteausnehmungen 2 zur Adhäsion an einer Holzoberfläche 23 der Halteausnehmung 2 eingefüllt werden. Nach dem Abbinden der Verbundmasse und dem kraftschlüssigen Halten an eingesetzten Verbindungskörpern 3 ist die Verbindungsvorrichtung zur Aufnahme von unterschiedlichsten Beanspruchungen, wie beispielsweise Zug- und Druckkräften, Scherkräften und Biegemomenten einsetzbar.

Fig. 2 zeigt einen zylindrischen Verbundkörper 3, beispielsweise aus Stahl im Sinne eines Stahlverbundkörpers, mit drei umlaufenden bereichsweisen Eintiefungen 6. Eine nicht dargestellte Zwischenschicht auf der Oberfläche 12 des Verbundkörpers 3 kann beispielsweise durch Feuerverzinken des Stahlverbundkörpers erzeugt werden. Die Eintiefungen 6 sind bezüglich des ursprünglichen Querschnitt des Verbundkörpers 3 beispielhaft gleichmäßige reduziert, beispielsweise durch Fräsen oder Pressen des Verbundkörpers 3. Der Verbundkörper 3 weist am vorderen Bereich 10 im Abschlussbereich 9 eine Manschette 16 auf, beispielhaft ebenfalls aus Stahl, die nach dem Einsetzen des Verbundkörpers 3 in die Halteausnehmung 2, dargestellt in Fig. 1, auf dem Holzkörper 1 anliegt, und die ein Austreten der Verbundmasse aus der Halteausnehmung verhindert. Zudem weist die Manschette 16 beispielhaft eine Bohrung 17 zur Aufnahme einer hier nicht dargestellten Schraubverbindung auf, die zum Anschluss an ein weiteres Bauteil, beispielsweise eine Stahlstütze oder einen Stahlbetonträger dienen kann. Eine beispielhafte Bohrung 18 in Verlängerung der Bohrung 17 dient in diesem Beispiel zum Einfüllen der Verbundmasse (hier nicht dargestellt) als Durchlass 11. Fig. 1 zeigt einen Auslass 8 im oberen Bereich der Halteausnehmung für den dargestellten Verbundkörper 3, durch den die durch die Verbundmasse verdrängte Luft austreten kann. Zudem zeigt ein eventuelles Austreten von Verbundmasse aus dem Auslass 8 im Sinne einer Kontrollöffnung an, dass der Verguss ausreichend ist.

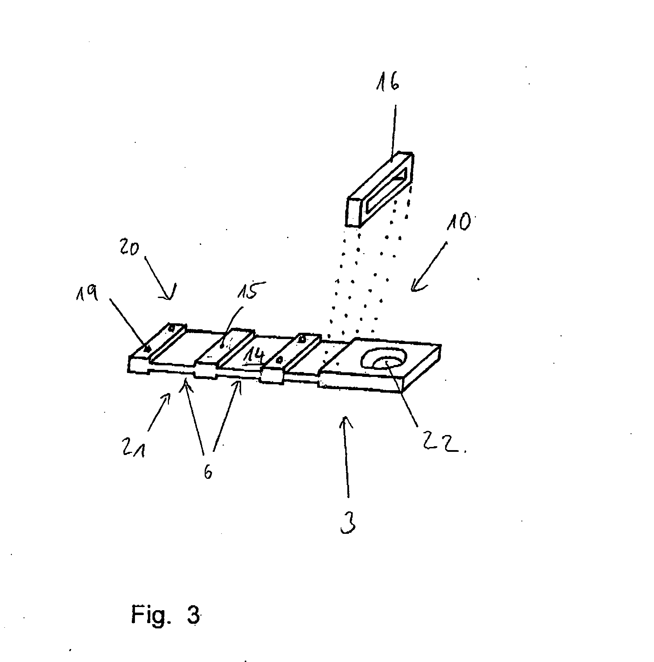

Fig. 3 zeigt einen rechteckigen Verbundkörper 3, beispielhaft aus Edelstahl, mit jeweils beispielhaft drei Eintiefungen 6 auf einer Oberseite 20 und einer Unterseite 21, der an die entsprechenden Halteausnehmung 2 des Holzkörpers 1 der Figur 1 angepasst ausgebildet ist. Eine nicht dargestellte Zwischenschicht des Verbundkörpers 3 wird hier beispielhaft durch einen Ölfilm gewährleistet, der beispielsweise mittels Sprühverfahren aufgebracht ist. Die Haltekräfte der Verbindungsvorrichtung sind durch die Zwischenschicht im wesentlichen bestimmt durch das Flächenverhältnis der dargestellten Scherfläche 14 der Verbundmasse 4 in Relation zu der geringeren Scherfläche 15 des Verbundkörpers. Der Verbundkörper 3 wird durch eine Manschette 16 beispielsweise aus Gummi in der Halteausnehmung 2 gehalten. Zwischen Manschette 16 und Verbundkörper 3 kann beispielsweise mittels eines Injektionsnadel die Verbundmasse in die Halteausnehmung 2 hineingespritzt werden. Die eingeschlossene Luft kann anschließend zusammen mit der überschüssigen Verbundmasse aus einem Auslass 8' entweichen. In einem vorderen Bereich 10 des Verbundkörpers 3 ist eine Bohrung 22 eingebracht, die über den Holzkörper 1 nach dem Einbau des Verbundkörpers 3 hinausragt und zum Anschluss von weiteren Bauteilen beispielsweise aus Stahlbeton, Holz oder Stahl dient. Distanzhalter 19 erlauben eine Lagesicherung des Verbundkörpers 3 in der Halteausnehmung 2 und liefern somit eine im Wesentlichen gleichmäßige Verbundmassengeometrie, hier beispielsweise die Klebefugendicke.

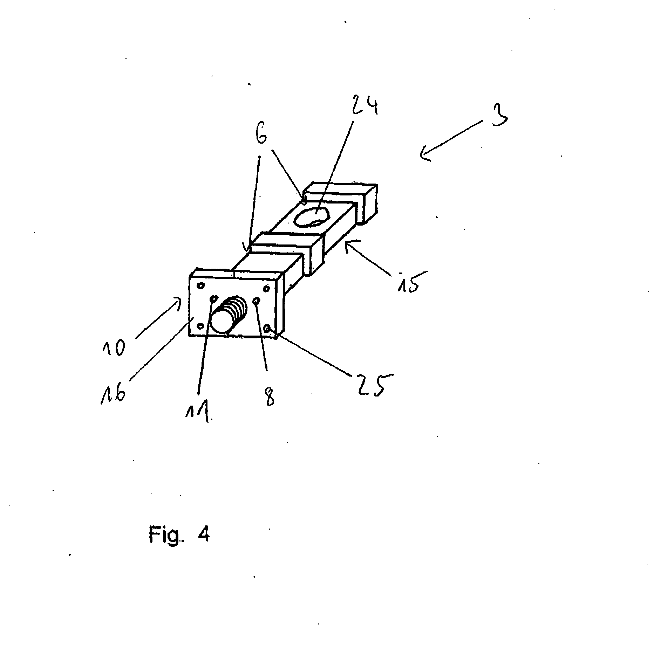

Fig. 4 zeigt einen rechteckigen Verbundkörper 3, beispielhaft aus Gussstahl, mit zwei Eintiefungen 6, die an drei Seiten den Verbundkörper 3 einschnüren, so dass beispielhaft im unteren Bereich der entsprechenden Halteausnehmung 2 im Holzkörper 1 eine flache Auflage vorhanden ist. Darüber hinaus ist beispielhaft in einer Eintiefung eine weitere Eintiefung 24 in Form einer Bohrung vorgesehen. Hierdurch ist nach Abbinden der Klebemasse ein zusätzlicher, im wesentlichen mechanischer Halt des Verbundkörpers 3 mit der Verbundmasse gegeben. Am vorderen Bereich 10 des Verbundkörpers 3 ist eine Manschette 16, beispielhaft aus Stahl, ausgeführt, die beispielhaft auf den Verbundköper 3 aufgeschweißt ist. Eine nicht dargestellte Zwischenschicht des Verbundkörpers 3 wird beispielhaft durch eine Pulverbeschichtung gewährleistet. Die Manschette 16 weist zudem Bohrungen 25 auf, die zur Fixierung des Verbundkörpers 3, beispielsweise durch Nägel an dem Holzköper nach dem Einführen in die Halteausnehmung 2 dienen. Zudem sind in der Manschette 16 Bohrungen als Durchlass 11 und Auslass 8 zum Einfüllen und Entlüften der Verbundmasse vorgesehen.

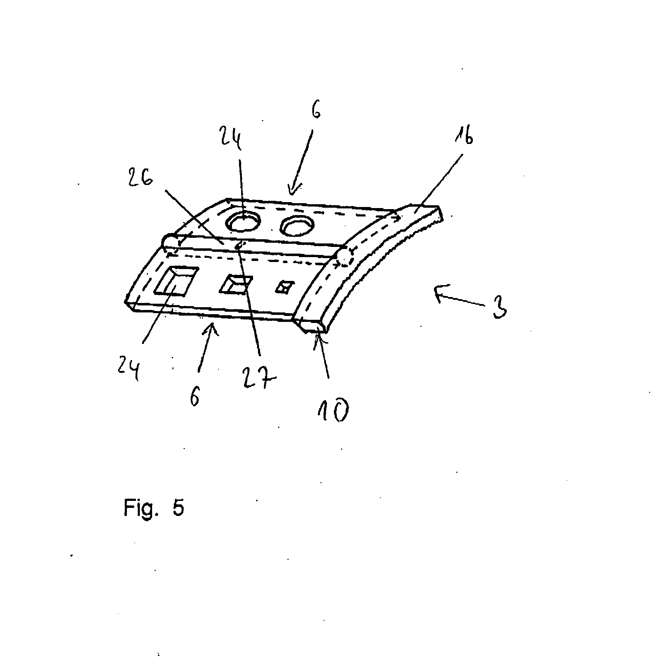

Fig. 5 zeigt einen gebogenen Verbundkörper 3 beispielsweise zum Einsetzen in die entsprechend geformte Halteausnehmung 2 im Holzkörper 1 der Fig. 1. Der Verbundkörper 3 weist zwei Eintiefungen 6. Die Eintiefungen 6 sind durch einen Zylinder 26 getrennt. Eine nicht dargestellte Zwischenschicht des Verbundkörpers 3 wird beispielhaft durch einen Farbanstrich geliefert. Die im Vordergrund dargestellte gebogene Eintiefung 6 des Verbundkörpers 3 zeigt drei weitere durchgehende Eintiefungen 24 unterschiedlicher Abmessungen als Rechteckstanzungen auf. Die Eintiefungen 24 werden beispielhaft zur Manschette 16 hin kleiner, so dass im hinteren Bereich des Verbundkörpers 3 eine größere Menge der Verbundmasse einen stärkeren Halt liefert. Des Weiteren sind beispielhaft in der im Hintergrund dargestellten gebogenen Vertiefungen 6 zwei weitere Vertiefungen 24 als gleichwertige Bohrungen dargestellt. Dieser Verbundkörper 3 zeichnet sich durch eine hohe Tragfähigkeit aus, da der Kraftfluss von der Manschette 16 auch über den Zylinder 26 in die Tiefe der Halteausnehmung 2 des Holzkörpers 1 eingeleitet werden kann.

Der Verbundkörper 3 wird nach dem Einfüllen der Verbundmasse in die Halteausnehmung 2 des Holzkörpers 1 in die Halteausnehmung 2 eingeschoben. Die Luft entweicht in diesem Fall beispielhaft durch die vordere Öffnung der Halteausnehmung 2 selbst. Ein Druckausgleich zwischen den Vertiefungen 6 erfolgt über eine Bohrung 27 im Zylinder 26. Die Krafteinleitung bzw. Kraftweiterleitung von der Manschette 16 zu weiteren angebrachten Bauteilen, beispielsweise aus Beton, Holz, oder Stahl kann einfach und sicher erfolgen.

Fig. 6 zeigt einen Längsschnitt durch eine Verbindungsvorrichtung. Der Verbundkörper 3, der in einer Halteausnehmung 2 eingesetzt wird, weist acht im wesentlichen gleichen Eintiefungen 6 auf. Der Verbundkörper 3 ist beispielsweise durch vier punktförmige Distanzhalter 19 in seiner Lage gesichert. Beispielhaft wird anschließend in einem zweiten Arbeitsgang die Verbundmasse 4 durch einen Durchlass 11, 18 in einen Zwischenraum 7 der Halteausnehmung 2 eingefüllt. Der Auslass 8 erlaubt in diesem Arbeitsgang das Entweichen der Luft. Erst nachdem aus dem Auslass 8 ein gewisser Teil der Verbundmasse 4 austritt, ist eine adäquate Füllung gegeben. Die Haltekräfte der Verbindungsvorrichtung sind im wesentlichen bestimmt durch das Flächenverhältnis der im Schnitt als Länge dargestellten Scherfläche 14 der Verbundmasse 4 in Relation zu der geringeren Scherfläche 15 des Verbundkörpers. Am vorderen Bereich 10 des Verbundkörpers 3 ist eine Manschette 16, beispielhaft aus einem Holzwerkstoff, aufgesetzt und verhindert dadurch das Austreten der Verbundmasse 4. Die Manschette 16 und der Verbundkörper 3 weisen eine identische Bohrung 17, 18 auf, in die beispielhaft ein Gewinde beispielsweise für einen nicht dargestellten Schraubenanschluss mit einem weiteren Holzbauteil eingebracht ist. Die erste Vertiefung 6 hinter der Manschette 16 ist beispielhaft durch eine Zwischenschicht 5 als Gummiband ausgeglichen worden. Diese Zwischenschicht 5 eliminiert den mechanischen Verbund zwischen der Verbundmasse 4 und dem Verbundkörper 3. Dadurch wird der Krafteinleitungsschwerpunkt des Verbundkörpers 3 in die Tiefe des Holzkörpers 1 verlagert und somit eine Spaltgefahr des Holzwerkstoffs 1 reduziert.

Fig. 6b zeigt einen Ausschnitt aus einem Verbundkörper 3, beispielsweise wie in Fig. 6, wobei die Eintiefung 6 durch einen Hinterschnitt mit einem Winkel 30 größer als 90 ° relativ zur Kraftrichtung 31 begrenzt ist.

Fig. 7 zeigt einen Längsschnitt durch eine Verbindungsvorrichtung. Ein Verbundkörper 3, insbesondere aus Metall, weist drei im wesentlichen gleichen Eintiefungen 6 in Form von Bohrungen auf. Der Verbundkörper 3 sitzt in einer entsprechenden Halteausnehmung 2 des Holzkörpers 1 und ist durch beispielsweise zwei Verschraubungen über die Manschette 16 in dem Holzkörper 1 positioniert. Der Verbundkörper 3 erfährt seine Lasteinwirkung über die Manschette 16 durch ein Schwert 28, insbesondere aus Metall, das mit einem weiteren, hier nicht dargestellten Bauteil, beispielsweise aus Stahl, Holz oder Beton durch eine Verbolzung verbunden ist. Ein Durchlass 11 erlaubt ein Befüllen der Halteausnehmung 2 mit der Verbundmasse 4, hier beispielsweise als zweikomponentiges Epoxidharz, der darüber liegende Auslass 8 wirkt als Druckausgleichsöffnung bzw. Kontrollöffnung. Eine nicht dargestellte Zwischenschicht ist hier beispielsweise durch einen feuerhemmenden Anstrich des Verbundkörpers 3 sowie der Manschette 16 und des Schwerts 28 gegeben.

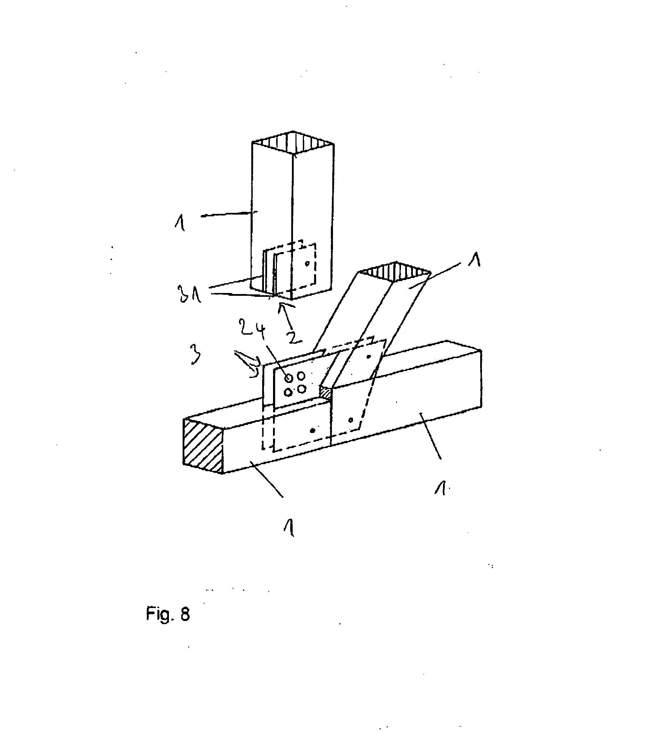

Fig. 8 zeigt eine Darstellung einer Verbindungsvorrichtung. Die Darstellung verdeutlicht, dass die erfindungsgemäße Verbindungsvorrichtung zumindest eines aber vorteilhaft auch mehrere aufnehmende Bauteile, hier beispielsweise Holzkörper 1, aufweisen kann, die durch einen oder auch mehrere Verbundkörper 3 im Sinne der Erfindung verbunden sind. Die Halteausnehmungen 2 der mehreren Bauteile, insbesondere Holzkörper 1, können sich dann vorteilhaft zwischen den Bauteilen, insbesondere Holzkörpern 2, fortsetzen. Fig. 8 zeigt vier Holzkörper 1, die durch zwei Verbundkörper 3 miteinander kraft- und/oder formschlüssig verbunden sind. Die Verbindungsvorrichtung zeigt somit beispielhaft eine Anwendung in der ein Verbundkörper 3 gleichzeitig eine Verbindung mit mehreren Holzkörpern 1 eingehen kann. Die Verbundkörper 3 ragen über entsprechende Halteausnehmungen 2 in die Holzkörper 1 hinein und werden dort beispielsweise mittels einer Verbundmasse, insbesondere Klebemasse, beispielsweise Polyurethan, verankert. Die Verbundkörper 3 weisen beispielhaft Eintiefungen 6, 24 auf, die hier nur teilweise dargestellt sind. Somit ist ein mechanischer Halt der Verbundkörper 1 nach Abbinden der Verbundmasse gegeben. Die Verbundkörper bestehen hierbei beispielsweise aus Stahl. Eine nicht dargestellte Zwischenschicht der Verbundkörper 3 wird beispielsweise durch eine hier nicht dargestellte Verzinkung erreicht.

Zur Herstellung der Verbindungsvorrichtung können die Verbundkörper 3 in die entsprechenden Halteausnehmungen 2 der Holzkörper 1 eingeschoben werden, zusammengefügt und beispielhaft durch eine hier nicht dargestellte Verschraubung fixiert werden. Erst später im Werk oder auf der Baustelle kann dann die Verbundmasse, insbesondere Klebemasse beispielsweise über Einfüllöffnungen in die Halteausnehmungen 2 so lange eingespritzt werden, bis sie an Auslässen austritt. Durch einen entsprechende Vorrichtung, beispielsweise ein hier nicht dargestelltes Klebeband oder eine Abdeckleiste können die Halteausnehmungen , die eine seitliche Öffnung 31 aufweisen, verschlossen werden und verhindern somit den Austritt der Verbundmasse.

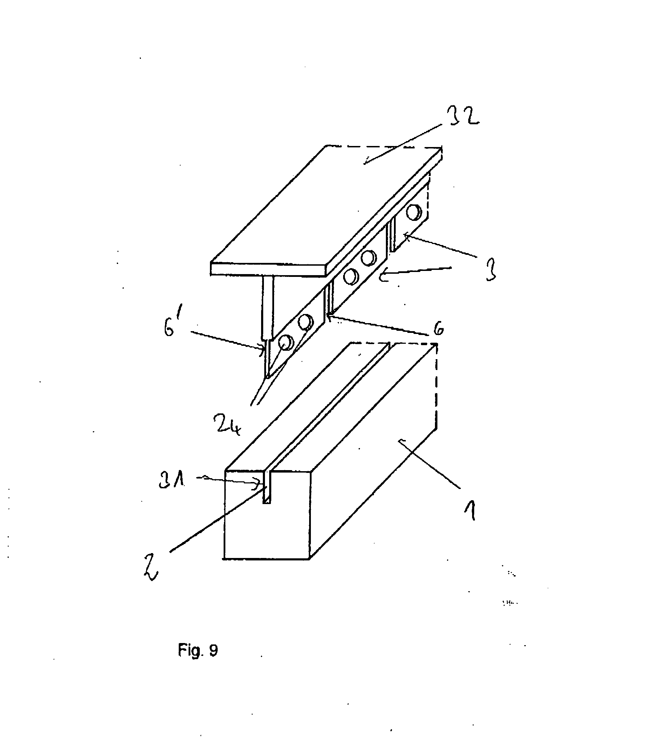

Fig. 9 zeigt eine Darstellung einer Verbindungsvorrichtung, wobei nur ein Teilabschnitt dargestellt ist. Holzkörper 1, beispielsweise ein Brettschichtholz bzw. ein Brettsperrholz, ist durch einen Verbundkörper 3 mit einem weiteren Bauteil 32, hier beispielsweise einem Metallkörper, kraft- und/oder formschlüssig verbunden. Der Verbundkörper 3 ragt über eine entsprechende Halteausnehmung 2 in den Holzkörper 1 hinein und kann dort mittels einer Verbundmasse, insbesondere Klebemasse, hier beispielsweise ein zwei komponentiges Epoxydharz, verankert werden. Der Verbundkörper 3 weist mehrere, hier beispielhaft fünf Eintiefungen 24 in der Form von Lochungen auf sowie zwei bereichsweise Eintiefungen 6 in Form von Auskerbungen und weitere Eintiefungen 6' in Form von Verjüngungen des Querschnittprofils auf. Durch die Eintiefungen 6, 6' und 24 ist ein guter mechanischer Halt des Verbundkörpers 3 nach Abbinden der Verbundmasse gegeben. Die Eintiefungen 6' erlauben zudem eine Positionierung des Verbundkörpers 3 im Holzkörper 1 und verhindern zugleich das Austreten der hier nicht dargestellten Verbundmasse aus der Halteausnehmung 2. Der Verbundkörper 3 sowie das Bauteil 32 bestehen hierbei beispielsweise aus Stahl. Die nicht dargestellte Zwischenschicht des Verbundkörpers 3 kann durch einen Anstrich erreicht werden.

Zur Herstellung der Verbindungsvorrichtung kann in den Verbundkörper 3 eine entsprechende Halteausnehmungen 2 durch einen Sägeschnitt eingebracht werden. In einem zweiten Schritt kann in die Halteausnehmung 2 die Verbundmasse eingefüllt werden. Nun kann der Verbundkörper 3 teilweise in den Holzkörper 1 eingeschoben werden bis der Anschlag, erzeugt durch die Eintiefungen 6', auf dem Holzkörper 1 aufliegt. Durch ein entsprechendes Formstück, beispielsweise einen Metallstift oder Nagel, kann eine Öffnung 31 an einer Seite der Halteausnehmung 2 verschlossen werden um ein Austreten der Verbundmasse zu verhindern. Falls Bauteil und Verbundkörper beide aus Metall hergestellt sind, kann der Verbundkörper 3 mit dem Bauteil 32 in deren Kontaktfläche verschweißt werden. In einer weiteren Ausführungsvariante kann der Verbundkörper 3 und das Bauteil 32 aus einem Walzprofil bestehen. In diesem Fall könnten die Eintiefungen 6' am Verbundkörper 3 eingewalzt werden.

### BEZUGSZEICHENLISTE

- 1: Holzkörper
- 2: Halteausnehmung
- 3: Verbundkörper
- 4: Verbundmasse
- 5: Zwischenschicht
- 6, 6': bereichsweise Eintiefung
- 7: Zwischenraum
- 8, 8': Auslass
- 9: Abschlussbereich
- 10: vorderer Bereich
- 11: Durchlass
- 12: Oberfläche
- 14: Scherfläche der Verbundmasse
- 15: Scherfläche des Verbundkörpers
- 16: Manschette
- 17: Bohrung
- 18: Bohrung
- 19: Distanzhalter
- 20: Oberseite
- 21: Unterseite
- 22: Bohrung
- 23: Holzoberfläche
- 24: Eintiefung
- 25: Bohrung
- 26: Zylinder
- 27: Bohrung
- 28: Schwert
- 29: Bohrung
- 30: Winkel des Hinterschnitts
- 31: Öffnung
- 32: Bauteil

## Patentansprüche

1. Verbindungsvorrichtung, mit einem aufnehmenden Bauteil, das zumindest eine insbesondere durchgehende Halteausnehmung (2) aufweist, und mit einem Verbundkörper (3), der in die Halteausnehmung (2) im Bauteil eingebracht ist, wobei in einem Zwischenraum (7) in der Halteausnehmung (2) zwischen Bauteil und eingesetztem Verbundkörper (3) eine verbundmasse (4) derart aushärtend eingebracht ist, dass der Verbundkörper (3) in der Halteausnehmung (2) im Wesentlichen kraftschlüssig gehalten ist, wobei zwischen Verbundkörper (3) und Verbundmasse (4) zumindest teilweise eine zwischenschicht (5), insbesondere im Sinne einer Ausbildung der Oberfläche des Verbundkörpers (3) und/oder der Verbundmasse (4), vorgesehen ist, die die Verbundmasse (4) vom Verbundkörper (3) zumindest teilweise entkoppelt, **dadurch gekennzeichnet, dass** das Bauteil ein Holzkörper (1) ist, wobei der Verbundkörper (3) zumindest eine bereichsweise Eintiefung (6, 24) aufweist, die derart ausgebildet ist, dass nach Abbinden der verbundmasse (4) im Zwischenraum (7), insbesondere in der bereichsweisen Eintiefung (6, 24), ein kraftschlüssiger, mechanische Halt von dem Verbundkörper (3) zu dem Holzkörper (1) ausgebildet ist, wobei insbesondere eine Scherfläche (14) der Verbundmasse (4) größer ist als eine Scherfläche (15) des Verbundkörpers (3).

2. Verbindungsvorrichtung nach Anspruch 1, **dadurch gekennzeichnet, dass** die Verbundmasse (4) nach Aushärtung eine annähernd vollständige Adhäsion zur einer Holzoberfläche (23) der Halteausnehmung (2) im Holzkörper (1) erzeugt.

3. Verbindungsvorrichtung nach einem der Ansprüche 1 oder 2, **dadurch gekennzeichnet, dass** die bereichsweise Eintiefung (6, 24) teilweise oder vollständig durch den Verbundkörper (3) durchgehend im Sinne einer Bohrung ausgebildet ist.

4. Verbindungsvorrichtung nach einem der Ansprüche 1 bis 3, **dadurch gekennzeichnet, dass** die bereichsweise Eintiefung (6, 24) in einem rechten Winkel zu einer Beanspruchungsrichtung ausgebildet ist.

5. Verbindungsvorrichtung nach einem der Ansprüche 1 bis 4, **dadurch gekennzeichnet, dass** die bereichsweise Eintiefung (6, 24) einen Hinterschnitt mit einem Winkel (30) größer als etwa 90 ° aufweist, der insbesondere gebogen ausgebildet ist.

6. Verbindungsvorrichtung nach einem der Ansprüche 1 bis 5, **dadurch gekennzeichnet, dass** der Verbundkörper (3) einen Durchlass (11, 18) zum Einfüllen von Verbundmasse (4) in den Zwischenraum (7), insbesondere in die bereichsweise Eintiefung (6, 24), insbesondere an eine tiefste Stelle des Zwischenraums (7), aufweist.

7. Verbindungsvorrichtung nach einem der Ansprüche 1 bis 6, **dadurch gekennzeichnet, dass** ein Auslass (8) zum Austreten von verdrängter Luft aus dem Zwischenraum (7) in der Halteausnehmung (2) vorgesehen ist, der Insbesondere in dem Verbundkörper (3) und/oder im Holzkörper (1) vorgesehen ist.

8. Verbindungsvorrichtung nach einem der Ansprüche 1 bis 7, **dadurch gekennzeichnet, dass** der Verbundkörper (3) einen Abschlussbereich (9), insbesondere in einem vorderen Bereich (10) des Verbundkörpers (3) ausgebildet, insbesondere in Form einer außenliegenden Manschette, aufweist, der insbesondere ein Austreten von Verbundmasse (4) aus dem Zwischenraum (7) verhindert.

9. Verbindungsvorrichtung nach Anspruch 8, **dadurch gekennzeichnet, dass** der Durchlass (11, 18) und/oder der Auslaß (8, 8') im Abschlussbereich (9) des Verbundkörpers (3), insbesondere in der Manschette (16), eingerichtet sind.

10. Verbindungsvorrichtung nach einem der Ansprüche 1 bis 9, **dadurch gekennzeichnet, dass** die Zwischenschicht (5) eine Adhäsion der Verbundmasse (4) und des Verbundkörpers (3) zumindest teilweise verhindernde Beschichtung der Oberfläche (12) des Verbundkörpers (3) und/oder der Kontaktfläche der Verbundmasse (4) ist, insbesondere eine Pulverbeschichtung und/oder eine Zinkauflage und/oder ein Ölfilm und/oder eine Folie und/oder ein Anstrich.

11. Verbindungsvorrichtung nach einem der Ansprüche 1 bis 10, **dadurch gekennzeichnet, dass** die Verbundmasse (4) ein Kleber, insbesondere ein und/oder zweikomponentig, und/oder ein Mörtel, insbesondere eine Mörtelmischung, und/oder ein Silicon ist, wobei die Verbundmasse (4) insbesondere einen Anteil Fasern und/oder Bewehrungen aufweist.

12. Verbindungsvorrichtung nach einem der Ansprüche 1 bis 11, **dadurch gekennzeichnet, dass** die Verbundmasse (4) vor und/oder nach dem Einsetzen des Verbundkörpers (3) in die Halteausnehmung (2) im Holzkörper (1) einzufüllen ist.

13. Verfahren zur Herstellung einer Verbindungsvorrichtung, nach einem der Ansprüche 1 bis 12, wobei in ein Bauteil zumindest eine insbesondere durchgehende Halteausnehmung (2) eingebracht wird, insbesondere mittels Bohren und/oder Fräsen, und in einen Verbundkörper (3) zumindest eine bereichsweise Eintiefung (6, 24) eingebracht wird und eine Zwischenschicht (5) aufgebracht wird, die eine Adhäsion zwischen einer Verbundasse (4) und einer Oberfläche des Verbundkörper (3) zumindest teilweise verhindert, und der Verbundkörper (3) in die Halteausnehmung (2) eingebracht wird, wobei die Verbundmasse (4) vor dem Eindringen des Verbundkörpers (3) in die Halteausnehmung (2) und/oder nach dem Einbringen des Verbundkörpers (3) in die Halteausnehmung (2) eingebracht wird, wobei der Verbundkörper (3) in der Halteausnehmung (2) im Wesentlichen kraftschlüssig gehalten wird, **dadurch gekennzeichnet, dass** das Bauteil ein Holzkörper (1) ist, wobei zwischen Verbundkörper (3) und Verbundmasse (4) zumindest teilweise eine Zwischenschicht (5), insbesondere im Sinne einer Ausbildung der Oberfläche des Verbundkörpers (3) und/oder der Verbundmasse (4), eingebracht wird, die die Verbundmasse (4) vom Verbundkörper (3) zumindest teilweise entkoppelt, wobei der Verbundkörper (3) zumindest eine bereichsweise Eintiefung (6, 24) aufweist, die derart ausgebildet ist, dass nach Abbinden der Verbundmasse (4) im Zwischenraum (7), insbesondere in der bereichsweisen Eintiefung (6, 24), ein kraftschlüssiger, mechanische Halt von dem Verbundkörper (3) zu dem Holzkörper (1) ausgebildet wird, wobei insbesondere eine Scherfläche (14) der Verbundmasse (4) großer ist als eine Scherfläche (15) des Verbundkörpers (3).

14. Verfahren nach Anspruch 13, **dadurch gekennzeichnet, dass** die Verbundmasse (4) durch einen Durchlass (11) in einen Zwischenraum (7) zwischen Verbundkörper (3) und Halteausnehmung (2) eingebracht wird, wobei verdrängte Luft insbesondere durch einen Auslass (8) aus dem Zwischenraum (7) entweicht.

## Claims

1. Connecting device with a holding component, which has at least one specifically continuous holding recess (2), and with a composite body (3), which is introduced into the holding recess (2) in the component, whereby a hardening composite mass (4) is introduced in an intermediate space (7) in the holding recess (2) between the component and the inserted composite body (3) in such a way, that the composite body (3) is essentially held in the holding recess (2) by force-fitting, whereby an intermediate layer (5) is provided, at least partially, between the composite body (3) and the composite mass (4), specifically within the sense of a forming of the surface of the composite body (3) and/or of the composite mass (4), and said intermediate layer at least partially decouples the composite mass (4) from the composite body (3), **characterised by** the fact that the component is a wooden body (1), whereby the composite body (3) has at least one recess (6, 24) in certain areas, which is formed in such a way, that after the curing of the composite mass (4) in the intermediate space (7), specifically in the recess (6, 24) in certain areas, a mechanical force-fit stop is formed from the composite body (3) to the wooden body (1), whereby specifically one shearing surface (14) of the composite mass (4) is larger than one shearing surface (15) of the composite body (3).

2. Connecting device in accordance with claim 1, **characterised by** the fact that the composite mass (4) after hardening creates an almost complete adhesion to the one wooden surface (23) of the holding recess (2) in the wooden body (1).

3. Connecting device in accordance with one of the claims 1 or 2, **characterised by** the fact that the recess (6, 24) in certain areas is formed going partially or completely through the composite body (3) within the sense of a drilled hole.

4. Connecting device in accordance with one of the claims 1 to 3, **characterised by** the fact that the recess (6, 24) in certain areas is formed at a right angle to a stress direction.

5. Connecting device in accordance with one of the claims 1 to 4, **characterised by** the fact that the recess (6, 24) in certain areas has an undercut with an angle (30) greater than 90 °, which is formed specifically bent.

6. Connecting device in accordance with one of the claims 1 to 5, **characterised by** the fact that the composite body (3) has an aperture (11, 18) for pouring the composite mass (4) into the intermediate space (7), specifically into the recess (6, 24) in certain areas and specifically at the deepest point of the intermediate space (7).

7. Connecting device in accordance with one of the claims 1 to 6, **characterised by** the fact that an outlet (8) is provided for the escape of displaced air from the intermediate space (7) in the holding recess (2), and said outlet is specifically provided in the composite body (3) and/or in the wooden body (1).

8. Connecting device in accordance with one of the claims 1 to 7, **characterised by** the fact that the composite body (3) has a closure area (9), specifically formed in the front area (10) of the composite body (3) and specifically in the shape of an external sealing sleeve, and said closure area specifically prevents an escape of composite mass (4) from the intermediate space (7).

9. Connecting device in accordance with claim 8, **characterised by** the fact that the aperture (11, 18) and/or the outlet (8, 8') are located in the closure area (9) of the composite body (3) specifically in the sealing sleeve (16).

10. Connecting device in accordance with one of the claims 1 to 9, **characterised by** the fact that the intermediate layer (5) is a coating of the surface (12) of the composite body (3) and/or of the contact surface of the composite mass (4), which at least partially prevents an adhesion of the composite mass (4) and the composite body (3), specifically a powder coating and/or a zinc deposit and/or a film of oil and/or a plastic film and/or a coat of paint.

11. Connecting device in accordance with one of the Claims 1 to 10, **characterised by** the fact that the composite mass (4) is an adhesive, specifically one-component and/or two-component and/or a mortar, specifically a mortar mix and/or a silicone, whereby the composite mass (4) specifically has a proportion of fibres and/or reinforcement.

12. Connecting device in accordance with one of the Claims 1 to 11, **characterised by** the fact that the composite mass (4) is to be poured into the holding recess (2) in the wooden body (1) before and/or after the insertion of the composite body (3).

13. Process for the manufacture of a connecting device, in accordance with one of the Claims 1 to 12, whereby at least one specifically continuous holding recess (2) is introduced into a component, specifically by means of drilling and/or milling, and whereby at least one recess (6, 24) in certain areas is introduced into a composite body (3) and an intermediate layer (5) is applied, which at least partially prevents an adhesion between a composite mass (4) and the surface of the composite body (3), and whereby the composite body (3) is introduced into the holding recess (2), and the composite mass (4) is inserted before the introduction of the composite body (3) into the holding recess (2) and/or after the introduction of the composite body (3) into the holding recess (2), such that the composite body (3) is essentially held in the holding recess (2) by force-fitting, **characterised by** the fact that the component is a wooden body (1), whereby an intermediate layer (5) is introduced at least partially between the composite body (3) and composite mass (4), specifically within the sense of a forming of the surface of the composite body (3) and/or of the composite mass (4), and said intermediate layer at least partially decouples the composite mass (4) from the composite body (3), whereby the composite body (3) has at least one recess (6, 24) in certain areas, which is formed in such a way, that after the curing of the composite mass (4) in the intermediate space (7), specifically in the recess (6, 24) in certain areas, a mechanical force-fit stop is formed from the composite body (3) to the wooden body (1), whereby specifically one shearing surface (14) of the composite mass (4) is larger than one shearing surface (15) of the composite body (3).

14. Process in accordance with claim 13, **characterised by** the fact that the composite mass (4) is introduced through an aperture (11) into an intermediate space (7) between the composite body (3) and the holding recess (2), whereby displaced air escapes from the intermediate space (7) specifically through an outlet (8).

## Revendications

1. Dispositif de connexion avec une pièce de réception possédant au moins un évidement de fixation (2) en particulier continu, et avec un corps composite (3) positionné dans l'évidement de fixation (2) dans la pièce de réception ; à cette occasion, dans un espace intermédiaire (7) situé dans l'évidement de fixation (2), entre la pièce et le corps composite employé (3), est mise une masse composite (4) durcissante de telle sorte que le corps composite (3) est essentiellement maintenu par la force d'adhérence (friction) dans l'évidement de fixation (2) ; à cette occasion, entre le corps composite (3) et la masse composite (4) est prévue tout au moins partiellement une couche intermédiaire (5) - en particulier au sens d'une formation de la surface du corps composite (3) et/ou de la masse composite (4) - qui découple tout au moins partiellement la masse composite (4) du corps composite (3) ; **caractérisé en ce que** la pièce est un corps en bois (1) ; à cette occasion, le corps composite (3) présente au moins un creux existant par endroits (6, 24) et étant formé de telle sorte qu'après la prise de la masse composite (4) dans l'espace intermédiaire (7) - en particulier dans le creux existant par endroits (6, 24), un maintien mécanique par force d'adhérence du corps composite (3) vers le corps en bois (1) se forme, à l'occasion de quoi, en particulier, une surface de cisaillement (14) de la masse composite (4) est plus grande qu'une surface de cisaillement (15) du corps composite (3).

2. Dispositif de connexion conforme à la revendication 1, **caractérisé en ce que** la masse composite (4), après durcissement, produit une adhérence quasiment complète vers une surface en bois (23) de l'évidement de fixation (2) dans le corps en bois(1).

3. Dispositif de connexion conforme à l'une des revendications 1 ou 2, **caractérisé en ce que** le creux existant par endroits (6, 24) traverse partiellement ou intégralement le corps composite (3) au sens d'un percement.

4. Dispositif de connexion conforme à l'une des revendications 1 à 3, **caractérisé en ce que** le creux existant par endroits (6, 24) est positionné en angle droit par rapport à une direction de sollicitation.

5. Dispositif de connexion conforme à l'une des revendications 1 à 4, **caractérisé en ce que** le creux existant par endroits (6, 24) présente une contre-dépouille avec un angle (30) supérieur à environ 90° qui est en particulier de forme incurvée.

6. Dispositif de connexion conforme à l'une des revendications 1 à 5, **caractérisé en ce que** le corps composite (3) présente un passage (11, 18) permettant de remplir la masse composite (4) dans l'espace intermédiaire (7), en particulier dans le creux existant par endroits (6, 24), en particulier à un endroit le plus profond de l'espace intermédiaire (7).

7. Dispositif de connexion conforme à l'une des revendications 1 à 6, **caractérisé en ce qu'**une sortie (8) est prévue dans l'évidement de fixation (2) pour le dégagement de l'air refoulé hors de l'espace intermédiaire (7), ladite sortie étant en particulier prévue dans le corps composite (3) et/ou dans le corps en bois (1).

8. Dispositif de connexion conforme à l'une des revendications 1 à 7, **caractérisé en ce que** le corps composite (3) présente une zone d'extrémité (9), placée en particulier dans une partie avant (10) du corps composite (3), en particulier sous forme d'une manchette positionnée à l'extérieur, ladite zone d'extrémité empêchant en particulier que de la masse composite (4) ne s'échappe de l'espace intermédiaire (7).

9. Dispositif de connexion conforme à la revendication 8, **caractérisé en ce que** le passage (11, 18) et/ou la sortie (8, 8') sont installés dans la zone d'extrémité (9) du corps composite (3), en particulier dans la manchette (16).

10. Dispositif de connexion conforme à l'une des revendications 1 à 9, **caractérisé en ce que** la couche intermédiaire (5) est un revêtement de la surface (12) du corps composite (3) et/ou de la surface de contact de la masse composite (4) empêchant tout au moins partiellement une adhérence de la masse composite (4) et du corps composite (3), en particulier un revêtement pulvérisé et/ou une couche de zinc et/ou un film huileux et/ou une fine feuille et/ou un revêtement peint.

11. Dispositif de connexion conforme à l'une des revendications 1 à 10, **caractérisé en ce que** la masse composite (4) est une colle, en particulier à une et/ou à deux composantes, et/ou un mortier, en particulier un mélange de mortier, et/ou un silicone ; à cette occasion, la masse composite (4) présente en particulier une part de fibres et/ou de renforcements.

12. Dispositif de connexion conforme à l'une des revendications 1 à 11, **caractérisé en ce que** la masse composite (4) doit être remplie avant et/ou après la mise en place du corps composite (3) dans l'évidement de fixation (2) dans le corps en bois (1).

13. Procédé de fabrication d'un dispositif de connexion conforme à l'une des revendications 1 à 12 ; à cette occasion, un évidement de fixation (2) en particulier continu est positionné dans une pièce, en particulier au moyen d'un perçage et/ou fraisage, et au moins un creux existant par endroits (6, 24) est positionné dans un corps composite (3), et une couche intermédiaire (5) est posée - ladite couche intermédiaire empêchant au moins partiellement une adhérence entre une masse composite (4) et une surface du corps composite (3), et le corps composite (3) est positionné dans l'évidement de fixation (2), la masse composite étant à cette occasion positionnée avant la mise en place du corps composite (3) dans l'évidement de fixation (2) et/ou après la mise en place du corps composite (3) dans l'évidement de fixation (2), et le corps composite (3) étant à cette occasion maintenu dans l'évidement de fixation (2) essentiellement par la force d'adhérence (friction), **caractérisé en ce que** la pièce est un corps en bois (1) ; à cette occasion, entre le corps composite (3) et la masse composite (4) est positionnée tout au moins partiellement une couche intermédiaire (5) - en particulier au sens d'une formation de la surface du corps composite (3) et/ou de la masse composite (4) - qui découple tout au moins partiellement la masse composite (4) du corps composite (3), le corps composite (3) présentant à cette occasion au moins un creux existant par endroits (6, 24) et formé de telle sorte qu'après la prise de la masse composite (4) dans l'espace intermédiaire (7) - en particulier dans le creux existant par endroits (6, 24), un maintien mécanique par force d'adhérence du corps composite (3) vers le corps en bois (1) se forme, à l'occasion de quoi, en particulier, une surface de cisaillement (14) de la masse composite (4) est plus grande qu'une surface de cisaillement (15) du corps composite (3).

14. Procédé conforme à la revendication 13, **caractérisé en ce que** la masse composite (4) est amenée par un passage (11) dans un espace intermédiaire (7) entre le corps composite (3) et l'évidement de fixation (2) ; à cette occasion, l'air refoulé est dégagé de l'espace intermédiaire (7) en particulier par une sortie (8).
